# EUROPÄISCHE PATENTANMELDUNG

(11) **EP 3 699 559 A1**
(43) Veröffentlichungstag der Anmeldung: **26.08.2020**
(21) Anmeldenummer: 20158809.2
(22) Anmeldetag: 21.02.2020
(51) Int. Cl.: G01F 23/292, G01F 23/296, G01F 23/14, G01F 23/26, G01F 23/00

(54) **FÜLLSTANDSMESSVORRICHTUNG**

(30) Priorität: 25.02.2019 DE 102019104753
(71) Anmelder: Schlüter Automation und Sensorik GmbH, 79674 Todtnau (DE)
(72) Erfinder: SCHLÜTER, Jens, 79674 Todtnau (DE)
(74) Vertreter: Mertzlufft-Paufler, Cornelius

(57) **Zusammenfassung**

Die Erfindung befasst sich mit Verbesserungen auf dem technischen Gebiet der Füllstandsmessung von Feststoffen in Feststoffbehältern (2). Dazu wird unter anderem die Füllstandsmessvorrichtung (1) vorgeschlagen. Diese weist wenigstens zwei in Gebrauchsstellung der Füllstandsmessvorrichtung insbesondere vertikal voneinander beabstandete Anwesenheitssensoren (3) auf, die dazu eingerichtet sind, die Anwesenheit von Feststoff (4) in ihrem Sensorbereich zu detektieren (Fig. 4) .

## Beschreibung

Die Erfindung betrifft eine Füllstandsmessvorrichtung zur Messung eines Füllstandes von Feststoff, insbesondere von Schüttgut, in einem Feststoffbehälter, einen Feststoffbehälter, der vorzugsweise als Feststoffsilo ausgebildet ist, sowie die Verwendung einer derartigen Füllstandsmessvorrichtung zur Bestimmung des Füllstandes in einem Feststoffbehälter.

Feststoffbehälter sind in unterschiedlichsten Ausführungsformen vorbekannt. Sie werden dazu verwendet, unterschiedliche Feststoffe, die beispielsweise pulverförmig oder auch körnig oder auch grobkörnig sein können, zu bevorraten. So ist es beispielsweise bekannt, derartige Feststoffbehälter in Form von Feststoffsilos an Baustellen aufzustellen, um darin Baustoffe, beispielsweise Putze, Zement oder sonstige Schüttgüter bereitzuhalten. Bei anderen Anwendungsformen werden Feststoffbehälter oder Silos dazu verwendet, Granulate, beispielsweise Kunststoffgranulate, Getreide oder auch Futtermittel zu speichern.

Je nach Konsistenz der in den Feststoffbehältern angeordneten Schüttgüter kann es beispielsweise zu einer mehr oder minder starken Staubentwicklung innerhalb des Feststoffbehälters kommen. Es ist auch möglich, dass die Schüttgüter vergleichsweise aggressive chemische Eigenschaften haben. All dies sind Faktoren, die eine zuverlässige Messung des Füllstandes innerhalb des Silos erschweren oder verhindern können. Insbesondere im Zusammenhang mit solchen Schüttgütern, die eine große Staubentwicklung verursachen, ist es oftmals nur erschwert möglich oder gar unmöglich, den Füllstand innerhalb des Silos optisch, beispielsweise mit Laser, zu bestimmen. Auch der Einsatz von akustischen Messvorrichtungen, die beispielsweise mittels Ultraschall den Abstand zwischen dem Sensor und dem Schüttgut bestimmen und daraus den Füllstand des Feststoffbehälters ableiten, kann bei derartigen Umgebungsbedingungen, die durch das Schüttgut verursacht werden, erschwert sein.

Aufgabe der Erfindung ist es daher, eine Füllstandsmessvorrichtung, einen Feststoffbehälter sowie die Verwendung einer Füllstandsmessvorrichtung vorzuschlagen, die eine zuverlässige Bestimmung des Füllstandes innerhalb eines Feststoffbehälters auch bei widrigen Bedingungen erlauben.

Zur Lösung dieser Aufgabe wird zunächst die Füllstandsmessvorrichtung mit den Mitteln und Merkmalen des unabhängigen Anspruchs vorgeschlagen, der auf eine solche Füllstandmessvorrichtung gerichtet ist.

Insbesondere wird zur Lösung der Aufgabe somit eine Füllstandsmessvorrichtung vorgeschlagen, die zur Messung eines Füllstandes von Feststoff, insbesondere von Schüttgut in einem Feststoffbehälter eingerichtet ist, und die wenigstens zwei in Gebrauchsstellung voneinander beabstandete Anwesenheitssensoren aufweist, die dazu eingerichtet sind, die Anwesenheit von Feststoff in ihrem Sensorbereich zu detektieren.

Die erfindungsgemäße Füllstandsmessvorrichtung hat den Vorteil, dass ihre zumindest zwei in Gebrauchsstellung verteilt und insbesondere vertikal zueinander beabstandeten Anwesenheitssensoren innerhalb des Feststoffbehälters nur einen vergleichsweise geringen Abstand zu dem Feststoff haben, der die zuverlässige Bestimmung des Füllstandes begünstigen kann. Dann wenn Feststoff aufgrund des Feststofffüllstands innerhalb des Feststoffbehälters in den Sensorbereich eines der Anwesenheitssensoren der Füllstandsmessvorrichtung gelangt, erkennt dies der jeweilige Anwesenheitssensor und löst ein entsprechendes Signal aus, aus dem in Kenntnis der Position des auslösenden Sensors im Feststoffbehälter abgeleitet werden kann, wie hoch der Füllstand innerhalb des Feststoffbehälters ist. Dadurch dass die Füllstandsmessvorrichtung wenigstens zwei beabstandete Anwesenheitssensoren umfasst, kann eine Änderung des Füllstandes auch bei einer Staubentwicklung innerhalb des Feststoffbehälters zuverlässig detektiert werden. Dies wäre bei großer Staubentwicklung mit einer optischen Prüfung des Füllstandes aufgrund der mit abnehmendem Füllstand zunehmenden Messdistanzen erschwert oder gar unmöglich.

Da sich der Füllstand insbesondere bei einem vertikal aufgestellten Feststoffbehälter in der Regel in Schwerkraftrichtung, also vertikal einstellt und ändert, kann es vorteilhaft sein, wenn die zumindest zwei Anwesenheitssensoren in Gebrauchsstellung der Füllstandsmessvorrichtung in Gebrauchsstellung der Füllstandsmessvorrichtung vertikal voneinander beanstandet sind grundsätzlich ist es aber natürlich auch vorstellbar, die zumindest zwei Anwesenheitssensoren in Gebrauchsstellung horizontal voneinander beabstandet in einem Feststoffbehälters anzuordnen. Dies macht insbesondere dann Sinn, wenn der Feststoff horizontal aus dem Feststoff Behälter aus geschoben wird, sich also der Füllstand des Feststoffbehälters maßgeblich in seiner horizontalen Ausrichtung ändert.

Bei einer besonders bevorzugten Ausführungsform der erfindungsgemäßen Füllstandsmessvorrichtung ist vorgesehen, dass zumindest ein Anwesenheitssensor ein induktiver, kapazitiver und/oder piezoelektrischer Sensor ist. Es ist auch möglich, Drucksensoren als Anwesenheitssensoren zu verwenden. Bei der bevorzugten Ausführungsform der Füllstandsmessvorrichtung ist jedoch vorgesehen, dass mehrere oder sämtliche Anwesenheitssensoren der Füllstandsmessvorrichtung kapazitive Sensoren sind. Kapazitive Sensoren haben den Vorteil, nahezu jegliches Material in ihrem Sensorbereich zu detektieren. Aufgrund der unterschiedlichen Dielektrizitätszahlen von Luft einerseits und unterschiedlichen Materialien andererseits ist eine an Sicherheit grenzende Auslösung eines derartigen kapazitiven Anwesenheitssensors gewährleistet, sobald Material, also der Feststoff oder das Schüttgut, in den Sensorbereich des Anwesenheitssensors gelangt. Ferner haben kapazitive Sensoren den Vorteil, im Betrieb vergleichsweise wenig Strom zu verbrauchen. So eignen sich kapazitive Sensoren insbesondere dort, wo die Füllstandsmessvorrichtung zur Stromversorgung nicht an ein Stromnetz angeschlossen werden kann, sondern mit einer eigenen Stromquelle, beispielsweise mit einer Batterie, einem Akku und/oder mit einem Solarmodul betrieben werden soll.

Bei einer Ausführungsform der Füllstandsmessvorrichtung ist zumindest ein Anwesenheitssensor ein optischer Reflextaster. Auch ein optischer Reflextaster kann in seinem Sensorbereich befindlichen Feststoff, insbesondere Schüttgut, zuverlässig detektieren. Insofern eignet sich auch ein optischer Reflextaster zur Verwendung als Anwesenheitssensor bei der Füllstandsmessvorrichtung.
Bei einer anderen Ausführungsform sind sämtliche Anwesenheitssensoren der Füllstandsmessvorrichtung als optische Reflextaster ausgebildet.

Bei einer Ausführungsform der Füllstandsmessvorrichtung ist vorgesehen, dass zumindest ein Anwesenheitssensor als Lichtschrankensensor ausgebildet ist. Dem Lichtschrankensensor kann ein Lichtschrankensender zur Ausbildung einer Lichtschranke zugeordnet sein. Der Lichtschrankensender ist dazu eingerichtet, einen Lichtstrahl in Richtung des Lichtschrankensenders auszustrahlen, um zwischen dem Lichtschrankensender und dem Lichtschrankensensor eine Lichtschranke auszubilden. Hierbei sei erwähnt, dass bei Verwendung von mehreren Lichtschrankensensoren als Anwesenheitssensoren auch die diesen zugeordneten Lichtschrankensender entsprechend beabstandet zueinander angeordnet sein können.

Um die Funktionsweise der Füllstandsmessvorrichtung, die zumindest einen Anwesenheitssensor in Form eines Lichtschrankensensors aufweist, auch bei widrigen, also beispielsweise staubigen Bedingungen gewährleisten zu können, ist es zweckmäßig, wenn ein Abstand zwischen dem Lichtschrankensensor und dem ihm zugeordneten Lichtschrankensender 20 cm oder weniger beträgt. So kann der Abstand beispielsweise zwischen 1 cm und 20 cm betragen.

Die Füllstandsmessvorrichtung kann zumindest einen zusätzlichen Sensor aufweisen. Mit diesem zusätzlichen Sensor kann ein weiterer Parameter aus dem Inneren des Feststoffbehälters, in dem die Füllstandsmessvorrichtung in Gebrauchsstellung angeordnet ist, ermittelt werden. Der zumindest eine zusätzliche Sensor kann beispielsweise ein Temperatursensor sein, mit dem die Temperatur im Inneren des Feststoffbehälters und/oder eine Temperatur des in dem Feststoffbehälter angeordneten Feststoffes oder Schüttgutes bestimmt werden kann. Es auch möglich, als zusätzlichen Sensor einen Feuchtigkeitssensor vorzusehen. Mithilfe des Feuchtigkeitssensors kann die Feuchtigkeit des Schüttgutes oder Feststoffes innerhalb des Feststoffbehälters bestimmt werden. Insbesondere bei solchen Feststoffen, deren Eigenschaften, Qualität und/oder Güte durch Anwesenheit von Feuchtigkeit beeinträchtigt wird, kann eine Überwachung der Feuchtigkeit mithilfe eines derartigen Feuchtigkeitssensors von Vorteil sein.

Ferner kann es zweckmäßig sein, wenn die Füllstandsmessvorrichtung als zusätzlichen Sensor einen Ortungssensor, insbesondere einen GPS-Sensor aufweist. Mithilfe des Ortungssensors kann der Standort der Füllstandsmessvorrichtung und damit auch eines Feststoffbehälters, der mit einer derartigen Füllstandsmessvorrichtung ausgestattet ist, bestimmt werden. Die so ermittelten Ortsdaten können beispielsweise bei der Routenplanung zur Versorgung, Abholung und/oder Wartung eines mit einer derartigen Füllstandsmessvorrichtung ausgestatteten Feststoffbehälters berücksichtigt werden.

Die Füllstandsmessvorrichtung kann einen Sensorträger aufweisen, an dem zumindest die wenigstens zwei Anwesenheitssensoren beabstandet voneinander angeordnet sind. Auch der zuvor bereits erwähnte zumindest eine zusätzliche Sensor kann an diesem Sensorträger angeordnet sein. Mit Hilfe des Sensorträgers lassen sich die mehreren Sensoren der Füllstandsmessvorrichtung besonders einfach in ordnungsgemäßer Ausrichtung zueinander in einen Feststoffbehälter einbringen.

Vorzugsweise sind die Anwesenheitssensoren gleichmäßig beabstandet und/oder gleichmäßig verteilt an dem zuvor bereits erwähnten Sensorträger der Füllstandsmessvorrichtung angeordnet. Es sei dabei erwähnt, dass mit steigender Anzahl von vorzugsweise gleichmäßig beabstandet oder verteilt, insbesondere an dem Sensorträger, angeordneten Anwesenheitssensoren auch das Auflösungsvermögen der Füllstandsmessvorrichtung steigt. Je höher also die Anzahl der verteilten Anwesenheitssensoren ist, desto genauere Aussagen sind über den Füllstand und auch über eine Änderung des Füllstandstandes in einem Feststoffbehälter, der mit der Füllstandsmessvorrichtung ausgestattet ist, möglich.

Vor allem dann, wenn die Füllstandsmessvorrichtung unter widrigen Umgebungsbedingungen und/oder in Anwesenheit von aggressiven Feststoffen und/oder Schüttgütern angewendet werden soll, kann es vorteilhaft sein, wenn die Füllstandsmessvorrichtung eine Schutzumhüllung für die Anwesenheitssensoren und/oder für einen, beispielsweise den bereits erwähnten, zumindest einen zusätzlichen Sensor aufweist. Diese Schutzumhüllung kann im einfachsten Fall ein Rohr, vorzugsweise ein Kunststoffrohr sein, innerhalb dessen die Anwesenheitssensoren und/oder der Sensorträger mit den Anwesenheitssensoren und gegebenenfalls einem oder mehreren zusätzlichen Sensoren geordnet ist/sind. Die Schutzumhüllung für die Anwesenheitssensoren kann lichtdurchlässig, vorzugsweise teiltransparent oder transparent sein. Auf diese Weise ist eine Sichtkontrolle der Anwesenheitssensoren innerhalb der Schutzumhüllung möglich. Ferner erlaubt eine lichtdurchlässige, vorzugsweise teiltransparente oder transparente, Schutzumhüllung die Verwendung von Lichtschrankensensoren als Anwesenheitssensoren.
Insbesondere bei der Verwendung von kapazitiven Anwesenheitssensoren ist die Schutzumhüllung nicht weiter störend und kann bei der Einrichtung der Füllstandsmessvorrichtung und/oder bei Kalibrierung der Anwesenheitssensoren entsprechend berücksichtigt werden.

Der zuvor erwähnte zumindest eine Lichtschrankensender, der einem als Lichtschrankensensor ausgebildeten Anwesenheitssensor zugeordnet sein kann, kann ebenfalls in einer lichtdurchlässigen, insbesondere teiltransparenten oder transparenten, Schutzumhüllung angeordnet sein. Auf diese Weise kann auch der Lichtschrankensender zuverlässig vor äußeren Einflüssen geschützt werden, ohne seine Funktion und die Ausbildung einer Lichtschranke zu beeinträchtigen.

Die Füllstandsmessvorrichtung kann ferner einen Träger aufweisen, an dem der wenigstens eine Lichtschrankensender angeordnet ist. Der zuvor erwähnte Träger kann dann beispielsweise parallel zu dem zuvor erwähnten Sensorträger in einem Feststoffbehälters angeordnet werden, um so zumindest eine Lichtschranke innerhalb des Feststoffbehälters zur Füllstandsmessung auszubilden.
Bei Verwendung von Lichtschrankensensoren als Anwesenheitssensoren kann es sinnvoll sein, mehrere Lichtschrankensensoren, insbesondere vertikal, beabstandet zueinander in einem Feststoffbehälter anzuordnen. Jedem Lichtschrankensensor kann dann zumindest ein Lichtschrankensender zugeordnet sein. Vorzugsweise haben die mehreren Lichtschrankensender untereinander den gleichen Abstand wie die Lichtschrankensensoren.

Die Füllstandsmessvorrichtung kann ferner ein Auswertemodul aufweisen. Das Auswertemodul kann mit den Anwesenheitssensoren und gegebenenfalls mit dem zumindest einen zusätzlichen Sensor der Füllstandsmessvorrichtung verbunden sein. Die Sensoren der Füllstandsmessvorrichtung können ihre Messwerte oder Signale dann an das Auswertemodul übertragen, das eine Auswertung dieser Messwerte und/oder Signale vornimmt.

Ferner kann die Füllstandsmessvorrichtung ein Datenübertragungsmodul aufweisen. Das Datenübertragungsmodul kann mit dem bereits zuvor erwähnten Auswertemodul und/oder gegebenenfalls auch direkt mit den Anwesenheitssensoren und/oder dem zumindest einen zusätzlichen Sensor der Füllstandsmessvorrichtung verbunden sein. Mithilfe des Datenübertragungsmoduls lassen sich die aus dem Inneren des Feststoffbehälters ermittelten Informationen an einen Empfänger übertragen. Wenn das Datenübertragungsmodul zur drahtlosen Datenübertragung, beispielsweise über ein Mobilfunknetz, eingerichtet ist, ist eine Datenübertragung auch von abgelegenen Orten möglich, an denen keine konventionellen Datenleitungen bereitstehen.

Um die Füllstandsmessvorrichtung mit der für ihren Betrieb notwendigen Energie versorgen zu können, auch wenn sie an abgelegenen Orten, an denen es gegebenenfalls keine eigene Stromversorgung gibt, kann die Füllstandsmessvorrichtung eine Stromquelle aufweisen. Diese Stromquelle kann beispielsweise eine Batterie und/oder ein Akku und/oder ein Solarmodul sein.

Zur Lösung der Aufgabe wird schließlich auch ein Feststoffbehälter, insbesondere ein Feststoffsilo, vorgeschlagen, der die Mittel und Merkmale des unabhängigen, auf einen derartigen Feststoffbehälter gerichteten Anspruchs aufweist. Insbesondere wird somit zur Lösung der Aufgabe ein Feststoffbehälter vorgeschlagen, der einen Feststoffaufnahmeraum und eine Füllstandsmessvorrichtung nach einem der auf eine solche gerichteten Ansprüche aufweist, wobei die zumindest zwei Anwesenheitssensoren der Füllstandsmessvorrichtungmit vertikalem Abstand zueinander in dem Feststoffaufnahmeraum angeordnet sind.

Anwesenheitssensoren der Füllstandsmessvorrichtung können bei einer Ausführungsform des Feststoffbehälters an einer Wand des Feststoffaufnahmeraums und mit vertikalem Abstand zueinander angeordnet sein, um den sich möglicherweise ändernden Füllstand innerhalb des Feststoffbehälters überwachen zu können. Bei einer anderen Ausführungsform des Feststoffbehälters ist vorgesehen, dass Anwesenheitssensoren der Füllstandsmessvorrichtung beabstandet zu zumindest einer Wand des Feststoffaufnahmeraums und mit vertikalem Abstand zueinander angeordnet sind. So können die Anwesenheitssensoren der Füllstandsmessvorrichtung, insbesondere an dem zuvor erwähnten Sensorträger, mitten im Feststoffaufnahmeraum angeordnet werden. Bei einer Ausführungsform des Feststoffbehälters sind Anwesenheitssensoren der Füllstandsmessvorrichtung an einem Einfüllstutzen des Feststoffbehälters angeordnet, über den Feststoff in den Feststoffaufnahmeraum eingefüllt wird. Diese Anordnung von Anwesenheitssensoren kann eine gegebenenfalls besonders genaue Überwachung des Füllstandes innerhalb des Feststoffbehälters begünstigen.

Schließlich wird Lösung der Aufgabe auch die Verwendung einer Füllstandsmessvorrichtung gelöst, wie sie zuvor ausführlich beschrieben wurde und wie sie in den auf eine solche Füllstandsmessvorrichtung gerichteten Ansprüche beansprucht wird. Demnach ist vorgesehen, dass zur Bestimmung eines Füllstandes in einem Feststoffbehälter eine Füllstandsmessvorrichtung nach einem der Ansprüche 1 bis 10 verwendet wird. Bei dem Feststoffbehälter kann es sich, wie bereits zuvor erwähnt, um ein Feststoffsilo oder Baustoffsilo handeln.

Die Erfindung wird nun anhand einer Ausführungsform näher beschrieben, ist jedoch nicht auf diese Ausführungsform beschränkt. Weitere Ausführungsformen der Erfindung ergeben sich in Kombination der Merkmale einzelner oder mehrerer Schutzansprüche untereinander und/oder in Kombination einzelner oder mehrerer Merkmale des Ausführungsbeispiels. Es zeigen in teilweise stark schematisierter Darstellung.
- Figur 1:: eine Vorderansicht eines Sensorträgers einer Füllstandsmessvorrichtung, an dem sieben gleichmäßig zueinander beabstandete Anwesenheitssensoren und zwei weitere Sensoren angeordnet sind,
- Figur 2: eine stark schematisierte Ansicht einer erfindungsgemäßen Füllstandsmessvorrichtung, wobei der Sensorträger aus Figur 1 in einer Schutzumhüllung der Füllstandsmessvorrichtung angeordnet ist,
- Figur 3: eine stark schematisierte Ansicht eines Feststoffbehälters in Form eines Feststoffsilos mit der in Figur 2 gezeigten Füllstandsmessvorrichtung in ihrer Gebrauchsstellung,
- Figur 4: eine weitere Ansicht des in Figur 3 gezeigten Feststoffbehälters mit Feststoff in seinem Feststoffaufnahmeraum, sowie
- Figur 5: eine stark schematisierte Ansicht einer anderen Füllstandsmessvorrichtung, die einen mit Lichtschrankensensoren bestückten Sensorträger und einen dem Sensorträger zugeordneten Träger mit entsprechenden Lichtschrankensendern aufweist.

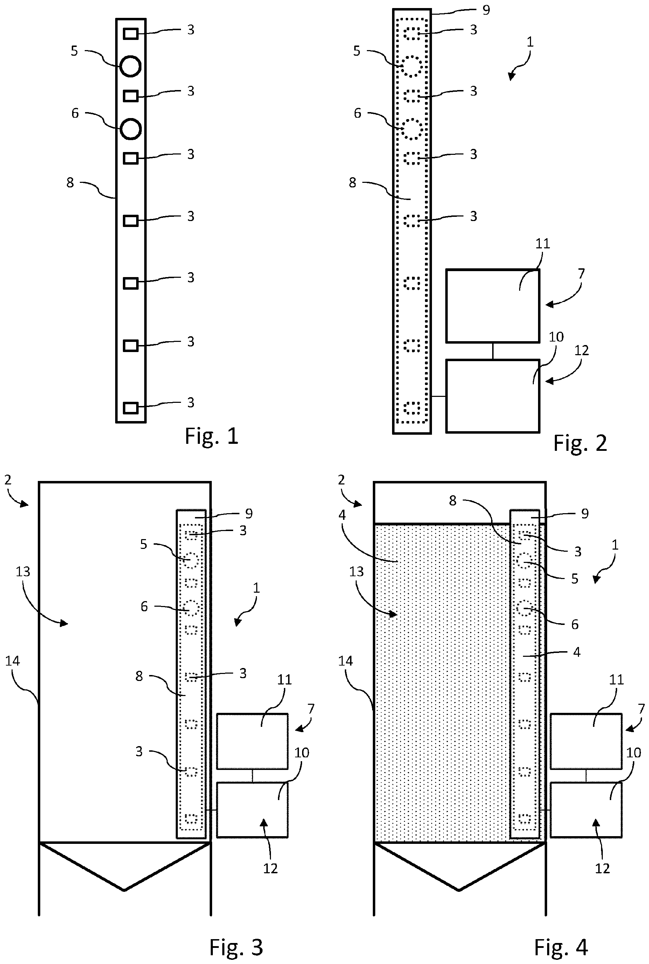

Sämtliche Figuren zeigen zumindest Teile einer im Ganzen mit 1 bezeichneten Füllstandsmessvorrichtung. Die Füllstandsmessvorrichtung 1 ist dazu eingerichtet den Füllstand von Feststoff, insbesondere von Schüttgut, in einem Feststoffbehälter 2, wie er in den Figuren 3 und 4 schematisiert dargestellt ist, zu bestimmen. Die Füllstandsmessvorrichtung 1 umfasst mehrere in Gebrauchsstellung der Füllstandsmessvorrichtung 1 vertikal voneinander beabstandete Anwesenheitssensoren 3. Die Anwesenheitssensoren 3 sind dazu eingerichtet, die Anwesenheit von Feststoff 4 in ihrem Sensorbereich zu detektieren.

Sämtliche der Anwesenheitssensoren 3 des in den Figuren 1 bis 4 gezeigten Ausführungsbeispiels der Füllstandsmessvorrichtung 1 sind kapazitive Anwesenheitssensoren. Diese eignen sich in besonderem Maße dazu, jeglichen Feststoff 5 zu detektieren. Die in den Figuren gezeigte Füllstandsmessvorrichtung 1 ist mit insgesamt drei zusätzlichen Sensoren 5, 6 und 7 ausgestattet. Der Sensor 5 ist ein Temperatursensor, mit dem die Temperatur des Feststoffes 4 beziehungsweise die Temperatur im Inneren des Feststoffbehälters 2 bestimmt werden kann. Der Sensor 6 ist ein Feuchtigkeitssensor, mit dem sich die Feuchtigkeit des Feststoffes 4 beziehungsweise die Feuchtigkeit im Inneren des Feststoffbehälters 2 bestimmen lässt. Der Sensor 7 ist ein Ortungssensor, insbesondere ein GPS-Sensor, der eine Ortung der Füllstandsmessvorrichtung 1 und damit auch eines mit der Füllstandsmessvorrichtung 1 ausgestatteten Feststoffbehälters 2 erlaubt.

Jede der gezeigten Füllstandsmessvorrichtungen 1 umfasst einen Sensorträger 8. Der Sensorträger 8 ist besonders gut in Figur 1 zu erkennen. An dem Sensorträger 8 sind sämtliche Anwesenheitssensoren 3 vertikal beabstandet voneinander und zudem auch die beiden zuvor erwähnten zusätzlichen Sensoren 5 und 6 angeordnet.

Bei den in den Figuren gezeigten Füllstandsmessvorrichtungen 1 sind die Anwesenheitssensoren 3 gleichmäßig beabstandet und gleichmäßig verteilt an dem Sensorträger 8 angeordnet. Um den Sensorträger 8 und insbesondere die Anwesenheitssensoren 3 sowie die beiden zusätzlichen Sensoren 5 und 6 vor schädlichen Einflüssen innerhalb des Feststoffbehälters 2 zu schützen, weist die Füllstandsmessvorrichtung 1 eine Schutzumhüllung 9 auf. Diese Schutzumhüllung 9 besteht aus einem Kunststoffrohr, das den Sensorträger 8 mit den Anwesenheitssensoren 3 und den beiden zusätzlichen Sensoren 6 und 7 in sich aufnimmt. Das Kunststoffohr kann transparent sein, um eine Sichtkontrolle der Anwesenheitssensoren 3 zu erlauben.

Jede der in den Figuren gezeigten Füllstandsmessvorrichtungen 1 weist ein Auswertemodul 10 und ein Datenübertragungsmodul 11 auf. Sowohl das Auswertemodul 10 als auch das Datenübertragungsmodul 11 sind in den Figuren 2 bis 5 zu erkennen. Das Datenübertragungsmodul 11 ist zur drahtlosen Datenübertragung eingerichtet.

Das Auswertemodul 10 ist mit den Anwesenheitssensoren 3 und auch mit den beiden zusätzlichen Sensoren 5 und 6 der Füllstandsmessvorrichtung 1 verbunden. Von den Anwesenheitssensoren 3 und den zusätzlichen Sensoren 5 und 6 erhält das Auswertemodul 10 Signale und Daten, die es auswertet und an das angeschlossene Datenübertragungsmodul 11 übermittelt. Das Datenübertragungsmodul 11 kann die ausgewerteten Daten beispielsweise in Form eines Berichtes an einen Empfänger übertragen. Der zuvor erwähnte Ortungssensor 7 ist bei dem in den Figuren gezeigten Ausführungsbeispiels der Füllstandsmessvorrichtung 1 an oder in dem Datenübertragungsmodul 11 angeordnet oder ausgebildet. Zusammen mit den Informationen aus dem Feststoffbehälters 2 kann das Datenübertragungsmodul auch die von dem Ortungssensor 7 generierten Ortungsdaten an den zuvor erwähnten Empfänger übertragen. Die somit insgesamt an den Empfänger übermittelten Daten können beispielsweise für eine Routenplanung zur Abholung, Nachfüllung und/oder Wartung oder dergleichen des Feststoffbehälters 2 genutzt werden.

Zur Stromversorgung weist jede der Füllstandsmessvorrichtungen 1 außerdem zumindest eine Stromquelle 12 auf. Diese Stromquelle kann eine Batterie, ein Akku oder auch ein Solarmodul sein. Selbstverständlich ist es möglich, sowohl eine Batterie, einen Akku als auch ein Solarmodul als Stromquelle 12 an der Füllstandsmessvorrichtung 1 vorzusehen.

Der Feststoffbehälter 2, der in den Figuren gezeigt ist, ist ein Feststoffsilo oder auch ein Baustoffsilo. Der Feststoffbehälter 2 weist einen Aufnahmeraum 13 auf. Die Anwesenheitssensoren 3 und die beiden zusätzlichen Sensoren 5 und 6 der Füllstandsmessvorrichtung 1 sind in Gebrauchsstellung der Füllstandsmessvorrichtung 1 innerhalb des Feststoffaufnahmeraums 13 des Feststoffbehälters 2 angeordnet.

Bei dem in den Figuren 3 und 4 gezeigten Ausführungsbeispiel sind die Anwesenheitssensoren 3 der Füllstandsmessvorrichtung 1 an einer Wand 14 des Feststoffaufnahmeraums 13 und mit dem bereits zuvor erwähnten vertikalen Abstand zueinander angeordnet. Bei einer in den Figuren nicht gezeigten Ausführungsform ist vorgesehen, dass die Anwesenheitssensoren 3 der Füllstandsmessvorrichtung 1 beabstandet zu zumindest einer Wand 14 des Feststoffaufnahmeraums 13, also mitten im Feststoffaufnahmeraum 13 angeordnet sind.

Um das Auswertemodul 10 und das Datenübertragungsmodul 11 vor den möglicherweise schädlichen Einflüssen des Feststoffs 4 innerhalb des Feststoffaufnahmeraums 13 zu schützen, sind diese außerhalb des Feststoffaufnahmeraums 13 des Stoffbehälters 2 angeordnet. Die Verwendung der Füllstandsmessvorrichtung 1 zur Bestimmung eines Füllstandes in dem Feststoffbehälter 2 wird aus einem Vergleich der beiden Figuren 3 und 4 deutlich.

Figur 3 zeigt den Feststoffbehälter 2 mit noch ungefülltem Feststoffaufnahmeraum 13. Figur 4 zeigt nun denselben Feststoffbehälter 2 mit Feststoff 4 gefülltem Feststoffaufnahmeraum 13. Deutlich ist zu erkennen, dass der von dem Feststoff 4 verursachte Füllstand innerhalb des Feststoffbehälters 2 sämtliche Anwesenheitssensoren 3 der Füllstandsmessvorrichtung 1 erfasst. Dementsprechend gibt jeder der Anwesenheitssensoren 3 ein die Anwesenheit von Feststoff 4 in seinem Sensorbereich repräsentierendes Signal an das Auswertemodul 10 der Füllstandsmessvorrichtung ab. Das Auswertemodul 10 kann aus den empfangenden Daten der Anwesenheitssensoren 3 auf den Füllstand innerhalb des Feststoffbehälters 2 rückschließen und ein entsprechendes Datenpaket und/oder einen Bericht über den Füllstand des Feststoffbehälters 2 zur Übertragung über das Datenübertragungsmodul 11 erstellen.

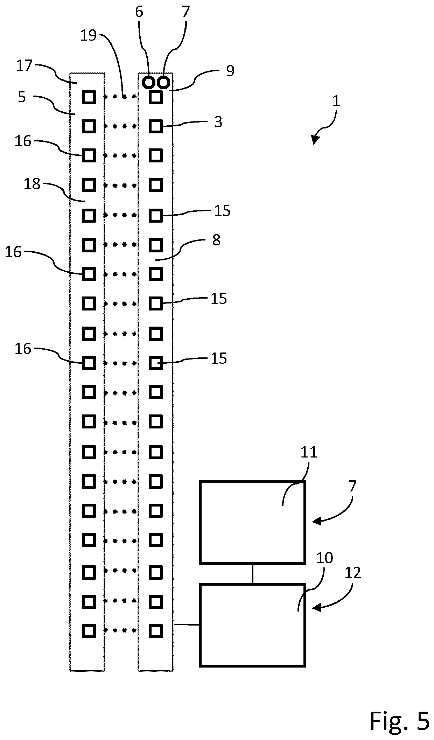

Figur 5 zeigt eine weitere Ausführungsform einer Füllstandsmessvorrichtung 1. Diese weist als Anwesenheitssensoren 3 eine Reihe in Gebrauchsstellung der Füllstandsmessvorrichtung 1 vertikal zueinander beabstandeter Lichtschrankensensoren 15 auf. Die Lichtschrankensensoren 15 sind an einem Sensorträger 8 angeordnet. Dem Sensorträger 8 ist ein Träger 18 zugeordnet.

An dem Träger 18 sind den Lichtschrankensensoren 15 zugeordnete Lichtschrankensender 16 angeordnet. Die Lichtschrankensender 16 haben denselben Abstand zueinander wie die Lichtschrankensensoren 15. Zwischen den Lichtschrankensendern 16 und den Lichtschrankensensoren 15 bilden sich Lichtschranken 19 aus, mit deren Hilfe Feststoff 4 zwischen den Lichtschrankensensoren 15 und den Lichtschrankensendern 16 detektiert und damit ein Füllstand innerhalb eines Feststoffbehälters 2 bestimmt werden kann.

Um die Funktionsweise der Füllstandsmessvorrichtung 1 gemäß Figur 5 auch bei widrigen, beispielsweise staubigen, Umgebungsbedingungen sicherzustellen, haben der Träger 18 und der Sensorträger 8 und damit die Lichtschrankensensoren 15 und die ihnen zugeordneten Lichtschrankensender 16 in Gebrauchsstellung der Füllstandsmessvorrichtung 1 einen Abstand von höchstens 20 cm.

Die Schutzumhüllung 9 des Sensorträgers 8 der in Figur 5 gezeigten Füllstandsmessvorrichtung 1 ist ebenso transparent und lichtdurchlässig wie eine Schutzumhüllung 17, innerhalb der die Lichtschrankensender 16 an ihrem Träger 18 angeordnet sind. Auf diese Weise kann trotz der Schutzumhüllungen 8 und 17 ein Raster aus Lichtschranken 19 zwischen den Lichtschrankensendern 16 und den Lichtschrankensensoren 15 zur Füllstandsmessung aufgespannt werden.

So kann auch mit der Füllstandsmessvorrichtung 1 gemäß Figur 5 der Füllstand von Feststoff 4 innerhalb eines Feststoffbehälters 2 zuverlässig gemessen werden. Wird eine Lichtschranke 19, die zwischen einem Lichtschrankensensor 15 und einem Lichtschrankensender 16 ausgebildet ist, durch Feststoff 4 unterbrochen, wird dies von dem Lichtschrankensensor 15 detektiert. Aus der Unterbrechung der Lichtschranke 19 kann das Auswertemodul 10 unter Berücksichtigung der Position des betroffenen Lichtschrankensensors 15 zumindest mittelbar auf den Füllstand innerhalb des Feststoffbehälters 2 rückschließen.
Die Erfindung befasst sich mit Verbesserungen auf dem technischen Gebiet der Füllstandsmessung von Feststoff 4 in Feststoffbehältern 2. Dazu wird unter anderem die Füllstandsmessvorrichtung 1 vorgeschlagen. Diese weist wenigstens zwei in Gebrauchsstellung der Füllstandsmessvorrichtung 1 insbesondere vertikal voneinander beabstandete Anwesenheitssensoren 3 auf, die dazu eingerichtet sind, die Anwesenheit von Feststoff 4 in ihrem Sensorbereich zu detektieren.

### Bezugszeichenliste

- 1: Füllstandsmessvorrichtung
- 2: Feststoffbehälter
- 3: Anwesenheitssensoren
- 4: Feststoff
- 5: Temperatursensor
- 6: Feuchtigkeitssensor
- 7: Ortungssensor
- 8: Sensorträger
- 9: Schutzumhüllung
- 10: Auswertemodul
- 11: Datenübertragungsmodul
- 12: Stromquelle
- 13: Feststoffaufnahmeraum
- 14: Wand
- 15: Lichtschrankensensor
- 16: Lichtschrankensender
- 17: transparente Schutzumhüllung
- 18: Träger für 16
- 19: Lichtschranke

## Patentansprüche

1. Füllstandsmessvorrichtung (1), eingerichtet zur Messung eines Füllstandes von Feststoff (4) in einem Feststoffbehälter (2), mit wenigstens zwei in Gebrauchsstellung voneinander beabstandeten Anwesenheitssensoren (3), die dazu eingerichtet sind, die Anwesenheit von Feststoff (4) in ihrem Sensorbereich (4) zu detektieren.

2. Füllstandsmessvorrichtung (1) nach Anspruch 1, wobei die zumindest zwei Anwesenheitssensoren (3) in Gebrauchsstellung der Füllstandsmessvorrichtung (1) vertikal und/oder horizontal voneinander beabstandet sind.

3. Füllstandsmessvorrichtung (1) nach Anspruch 1 oder 2, wobei zumindest ein Anwesenheitssensor (3) ein induktiver und/oder kapazitiver und/oder piezoelektrischer Sensor und/oder ein Drucksensor und/oder ein optischer Reflextaster ist, oder wobei mehrere oder sämtliche Anwesenheitssensoren (3) der Füllstandsmessvorrichtung induktive und/oder kapazitive und/oder piezoelektrische Sensoren und/oder Drucksensoren und/oder optische Reflextaster sind.

4. Füllstandsmessvorrichtung (1) nach einem der vorherigen Ansprüche, wobei zumindest ein Anwesenheitssensor (3) als Lichtschrankensensor (15) ausgebildet ist, insbesondere wobei dem Lichtschrankensensor (15) ein Lichtschrankensender (16) zugeordnet ist, vorzugsweise wobei ein Abstand zwischen dem Lichtschrankensensor (15) und dem ihm zugeordneten Lichtschrankensender (16) 20cm oder weniger beträgt, insbesondere zwischen 1cm und 20cm beträgt.

5. Füllstandsmessvorrichtung (1) nach einem der vorherigen Ansprüche, wobei die Füllstandsmessvorrichtung 1 zumindest einen zusätzlichen Sensor (5, 6, 7) aufweist, insbesondere einen Temperatursensor (5) und/oder einen Feuchtigkeitssensor (6) und/oder einen Ortungssensor (7).

6. Füllstandsmessvorrichtung (1) nach einem der vorherigen Ansprüche, wobei die Füllstandsmessvorrichtung (1) einen Sensorträger (8) aufweist, an dem zumindest die wenigstens zwei Anwesenheitssensoren (3) beabstandet voneinander und/oder ein oder der zumindest eine zusätzliche Sensor (5, 6, 7) angeordnet sind.

7. Füllstandsmessvorrichtung (1) nach Anspruch 6, wobei die Anwesenheitssensoren (3) gleichmäßig beabstandet und/oder gleichmäßig verteilt an dem Sensorträger (8) angeordnet sind.

8. Füllstandsmessvorrichtung (1) nach einem der vorherigen Ansprüche, wobei die Füllstandsmessvorrichtung (1) eine, insbesondere lichtdurchlässige, vorzugsweise teiltransparente oder transparente, Schutzumhüllung (9) für die Anwesenheitssensoren (3) und/oder einen oder den zumindest einen zusätzlichen Sensor (6, 7) aufweist, insbesondere ein Rohr, vorzugsweise ein Kunststoffrohr.

9. Füllstandsmessvorrichtung (1) nach einem der Ansprüche 4 bis 8, wobei der wenigstens eine Lichtschrankensender (16) in einer lichtdurchlässigen, insbesondere teiltransparenten oder transparenten, Schutzumhüllung (17) angeordnet ist, und/oder wobei der die Füllstandsmessvorrichtung (1) einen Träger (18) aufweist, an dem der wenigstens eine Lichtschrankensender (16) angeordnet ist.

10. Füllstandsmessvorrichtung (1) nach einem der vorherigen Ansprüche, wobei die Füllstandsmessvorrichtung (1) ein Auswertemodul (10) und/oder ein Datenübertragungsmodul (11), insbesondere das zur drahtlosen Datenübertragung eingerichtet ist, und/oder wenigstens eine Stromquelle (12), insbesondere eine Batterie und/oder einen Akku und/oder ein Solarmodul, aufweist.

11. Feststoffbehälter (2), insbesondere Feststoffsilo, mit einem Feststoffaufnahmeraum (13) und mit einer Füllstandsmessvorrichtung (1) nach einem der vorherigen Ansprüche, wobei die zumindest zwei Anwesenheitssensoren (3) der Füllstandsmessvorrichtung mit vertikalem Abstand zueinander in dem Feststoffaufnahmeraum (13) angeordnet sind.

12. Feststoffbehälter (2) nach Anspruch 11, wobei Anwesenheitssensoren (3) der Füllstandsmessvorrichtung (1) an einer Wand (14) des Feststoffaufnahmeraums (13) angeordnet sind und/oder wobei Anwesenheitssensoren (3) der Füllstandsmessvorrichtung (1) beabstandet zu zumindest einer Wand (14) des Feststoffaufnahmeraums (13) angeordnet sind.

13. Verwendung einer Füllstandsmessvorrichtung (1) nach einem der vorherigen Ansprüche zur Bestimmung eines Füllstandes in einem Feststoffbehälter (2), insbesondere in einem Feststoffsilo.
